# EUROPEAN PATENT SPECIFICATION

(11) **EP 2 757 649 B1**
(45) Date of publication and mention of the grant of the patent: **28.07.2021**
(21) Application number: 11872356.8
(22) Date of filing: 13.09.2011
(51) Int. Cl.: H02J 3/32, H02J 3/00, H02J 3/38

(54) **PEAK CUT SYSTEM**
PEAKSCHNEIDESYSTEM
SYSTÈME D'ÉCRÊTAGE

(43) Date of publication of application: 23.07.2014
(73) Proprietor: Toshiba Mitsubishi-Electric Industrial Systems Corporation, Tokyo 104-0031 (JP)
(72) Inventor: HANADA Masato, Tokyo 108-0073 (JP)
(74) Representative: Hoffmann Eitle
(86) International application number: PCT/JP2011/070782
(87) International publication number: WO 2013/038483

(56) References cited:
- JP-A- H1 169 893
- JP-A- 2002 034 162
- JP-A- 2002 135 979
- JP-A- 2003 244 840
- JP-A- 2007 523 584
- JP-A- 2011 083 044
- JP-A- 2011 083 044
- US-A- 6 134 124
- US-A1- 2007 035 290
- None

## Description

### Technical Field

The present invention relates to a peak cut system in cooperation with a power system, which carries out peak cut with respect to power received from the power system.

### Background Art

To carry out peak cut with respect to power received from a power system, a self-generating system in cooperation with the power system has been introduced (for instance, JP 2004 064810 A and JP 2011 083044 A).

In a technique according to JP 2004 064810 A, a convertor carries out conversion to charge power generated by a power-generating device and/or power supplied from a power system to a secondary battery or to supply power generated by the power-generating device and power which is discharged from the secondary battery, to a load. A controller controls the operation of the secondary battery so that the total of the power generated by the power-generating device and the power which is discharged from the secondary battery is not below power consumption of the load which exceeds a peak cut position determined by computation.

In addition, in a technique according to JP 2011 083044 A, when power consumed by a load is increased, after the discharge of power which is previously charged to efficiently operate a power-generating device, a first self-generating device is started so that excessive power is charged to a power storage device while the power is outputted to the load. Then, before the start of a second self-generating device, the power which is charged by the first self-generating device is discharged. Further, after the start of the second self-generating device, excessive power is charged to the power storage device while the power is outputted to the load. That is, in the technique according to JP 2011 083044 A, the procedure of the charge by a self-generating device, the discharge from a power storage device, the charge by another self-generating device, and the discharge from the power storage device is repeated.

US 2007 0035290 A1 discloses a device for covering the peak load of an electrical consumer connected to a public electricity network. A power inverter is fed by a DC accumulator and can be connected in parallel to the electricity supply of the consumer. In the connection, a measuring device is provided that is connected to a control device monitoring the energy consumption and activating the power inverter if the energy consumption exceeds a threshold.

### Summary of Invention

### Problems to be Solved by the Invention

In the techniques according to JP 2004 064810 A and JP 2011 083044 A, as shown in Fig. 2 or the like in the documents, for the peak cut, both the power-generating device and the power storage device are used to always drive the power-generating device. That is, in the techniques, the driving of the power-generating device is the essential configuration requirement for the problems to be solved.

However, recently, the cost of fuels necessary for driving the power-generating device has been very high. Therefore, the problem that a high running cost is necessary for driving the power-generating device has been serious.

Accordingly, an object of the present invention is to provide a peak cut system which can reduce the running cost of a power-generating device even when a peak cut process is carried out.

### Means for Solving the Problems

To achieve the above object, a peak cut system according to the present invention includes a load, a power system which carries out power supply to the load, a power-generating device which generates power and supplies the generated power to the load, a power storage device which carries out charge and discharge with respect to the load, and a control unit which controls the power supply to the load, wherein the control unit executes a first peak cut process which carries out peak cut with respect to power received from the power system by executing the discharge from the power storage device, and executes a second peak cut process which carries out the peak cut by carrying out the power generation by the power-generating device only when a predetermined amount of the peak cut cannot be achieved only by the discharge from the power storage device.

### Effects of the Invention

The peak cut system according to the present invention includes a load, a power system which carries out power supply to the load, a power-generating device which generates power and supplies the generated power to the load, a power storage device which carries out charge and discharge with respect to the load, and a control unit which controls the power supply to the load, wherein the control unit executes a first peak cut process which carries out peak cut with respect to power received from the power system by executing the discharge from the power storage device, and executes a second peak cut process which carries out the peak cut by carrying out the power generation by the power-generating device only when a predetermined amount of peak cut cannot be achieved only by the discharge from the power storage device.

Accordingly, in the present invention, for the peak cut process, the power generation by the power-generating device can be minimized always without the power generation by the power-generating device. Therefore, the peak cut system according to the present invention can prevent the power generation by the power-generating device even when the peak cut process is carried out in the case of increasing the running cost of the power-generating device due to the higher fuel cost. That is, the peak cut system can reduce the running cost of the power-generating device.

The object, features, aspects, and advantages of the present invention will be more apparent with reference to the following detailed description and the accompanying drawings.

### Brief Description of Drawings

Fig. 1 is a block diagram showing the schematic configuration of a peak cut system 100 according to an embodiment.
Fig. 2 is a flowchart describing the operation of the peak cut system 100 according to the embodiment.
Fig. 3 is a flowchart describing the operation of the peak cut system 100 according to the embodiment.
Fig. 4 is a flowchart describing the operation of the peak cut system 100 according to the embodiment.
Fig. 5 is a flowchart describing the operation of the peak cut system 100 according to the embodiment.
Fig. 6 is a flowchart describing the operation of the peak cut system 100 according to the embodiment.
Fig. 7 is a concept chart describing the operation of the peak cut system 100 according to the embodiment.
Fig. 8 is a concept chart describing the operation of the peak cut system 100 according to the embodiment.
Fig. 9 is a concept chart describing the operation of the peak cut system 100 according to the embodiment.
Fig. 10 is a concept chart describing the operation of the peak cut system 100 according to the embodiment.

### Description of Embodiment

Hereinafter, the present invention will be specifically described with reference to the drawings showing its embodiment.

### <Embodiment>

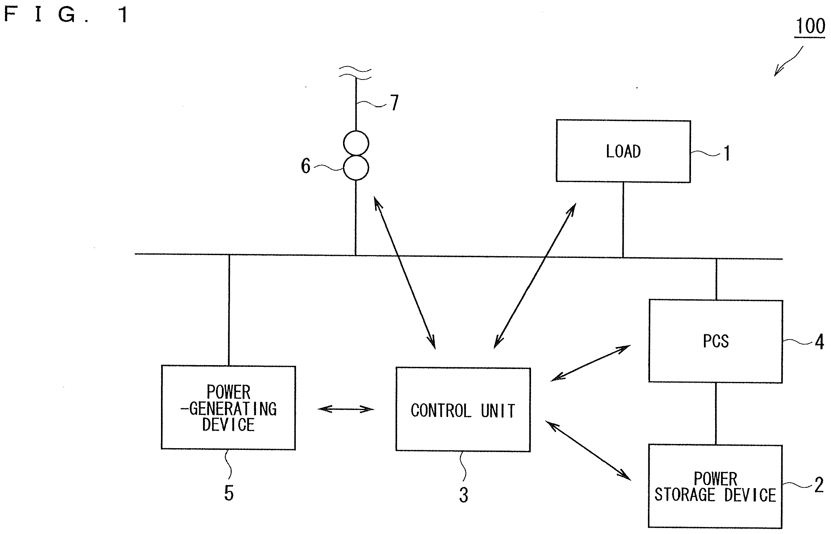

Fig. 1 is a schematic diagram showing the configuration of a peak cut system 100 according to the embodiment of the present invention.

As shown in Fig. 1, the peak cut system 100 according to this embodiment includes a load 1, a power storage device 2, a control unit 3, a PCS (Power Conditioning Subsystem) 4, a power-generating device 5, a power receiving unit 6, and a power system 7.

The load 1 is installed in an electrical system on the demander side. The load 1 is an electric device including electrical equipment and the like operated with power supply, and is installed in a plant and a building and the like. In Fig. 1, only one load 1 is shown, but a plurality of loads 1 may be installed. In addition to power supply from the power system 7, the load 1 can receive the supply of power which is discharged from the power storage device 2, and can receive the supply of power generated by the power-generating device 5.

The power system 7 is a power generation, transformation, and transmission system and the like for supplying power to the load 1 of the demander. That is, power supplied from the power system 7 means power supplied from a power company to the load 1 of the demander. The power supplied from the power system 7 can contribute to the charge to the power storage device 2.

The power receiving unit 6 receives power supplied from the power system 7, and outputs the received power to the load 1 and the power storage device 2 and the like. The power receiving unit 6 is the boundary between the power system 7 side and the electrical system on the demander side of the load 1.

The power storage device 2 is installed in the electrical system on the demander side. The power storage device 2 includes at least one or more batteries. Here, each battery is a secondary battery in which charge and discharge response is quick (that is, charge and discharge ability "C (ampere . time) is high (= several C or more)"). As the battery, for instance, a lithium ion battery can be adopted.

The power storage device 2 can charge power received by the power receiving unit 6 and power generated and outputted by the power-generating device 5. In addition, the power storage device 2 carries out discharge, and can supply discharged power to the load 1.

The PCS 4 is installed in the electrical system on the demander side. The PCS 4 includes an inverter and the like, and can convert power which is discharged from the power storage device 2 to power usable in the load 1. The PCS 4 converts alternating current power from the electrical system on the demander side to direct current power for the charge to the power storage device 2, and converts direct current power discharged from the power storage device 2 to alternating current power usable in the load 1.

The power-generating device 5 is installed in the electrical system on the demander side. The power-generating device 5 can supply generated power to the load 1. The power generated by the power-generating device 5 can contribute to the charge to the power storage device 2. The number of power-generating devices 5 is not limited to one, and may be plural. As the power-generating device 5, for instance, a device which generates power by using a fuel, such as oil, is adopted.

The control unit 3 is installed on the demander side. In addition, as shown in Fig. 1, the control unit 3 is mutually connected to the load 1, the power storage device 2, the PCS 4, the power-generating device 5, and the power receiving unit 6 to bidirectionally communicate therewith via a network communication network.

The control unit 3 uses the network structure to monitor and manage the power used state in the load 1, the state of power received from the power system 7 in the power receiving unit 6, the power generated and supplied state in the power-generating device 5, the charged and discharged state in the power storage device 2, and the remaining capacity of the power storage device 2. In addition, the control unit 3 uses the network structure to control power supply to the load 1. Specifically, the control unit 3 uses the network structure to control the charge and discharge to and from the power storage device 2 and the power generation and the stop of the power generation by the power-generating device 5.

As described above, the control unit 3 monitors and manages the power used state in the load 1, and calculates the prediction value of power demand in the load 1 through the monitoring and management. The control unit 3 can directly monitor the power used state in the load 1. Alternatively, for instance, the control unit 3 can indirectly monitor the power used state in the load 1 from the monitoring of power received by the power receiving unit 6, the monitoring of power which is charged and discharged to and from the power storage device 2, and the monitoring of power generated by the power-generating device 5 and the like.

Power demand is a well-known term, and is an average power used amount (kW) of the load 1 at a predetermined demand time-out. As the predetermined demand time-out, 30 minutes is typically adopted. That is, typically, power demand is continuously calculated for each 30-minute period.

For instance, when the predetermined demand time-out is 30 minutes, a total power used amount (kWh) of the load 1 for 30 minutes is calculated. Then, a value obtained by dividing the calculated total power used amount by 30 minutes (= the total power used amount for 30 minutes/30 minutes) is the power demand for 30 minutes.

As described above, the control unit 3 predicts power demand. The technique for predicting power demand is well-known, and is disclosed in e.g., Japanese Patent Application Laid-Open No. 8-63132 as Patent Document.

Typically, the power used amount of the load 1 at the completion of demand time-out is predicted from the current power used amount of the load 1 and a gradient relative to time of the current power used amount, so that the predicted power used amount is then divided by demand time-out. Thus, power demand can be predicted.

The control unit 3 according to this embodiment uses a predicted power demand, a set target value, and the electrical capacity of the power storage device 2 and the like to execute the following control.

That is, when the necessity for peak cut arises from the predicted power demand, the control unit 3 carries out control to start the discharge from the power storage device 2 while continuing power supply from the power system 7. A first peak cut process which carries out the peak cut with respect to power received from the power system 7 by executing the discharge from the power storage device 2 is executed. Further, the control unit 3 carries out control to start the power generation by the power-generating device 5 only when a predetermined amount of peak cut cannot be achieved by the discharge from the power storage device 2.

That is, in the present invention, when the predetermined amount of peak cut can be achieved only by the discharge from the power storage device 2, the control unit 3 prevents the power-generating device 5 from executing the power generation (this means that in the present invention, the peak cut process can be carried out only by the discharge from the power storage device 2, and in the present invention, the power generation by the power-generating device 5 is not carried out for the peak cut process at all times).

As described above, the peak cut only by the discharge from the power storage device 2 (that is, the peak cut without the power generation by the power-generating device 5) is referred to as the first peak cut process. On the contrary, the peak cut with the power generation by the power-generating device 5 is referred to as a second peak cut process.

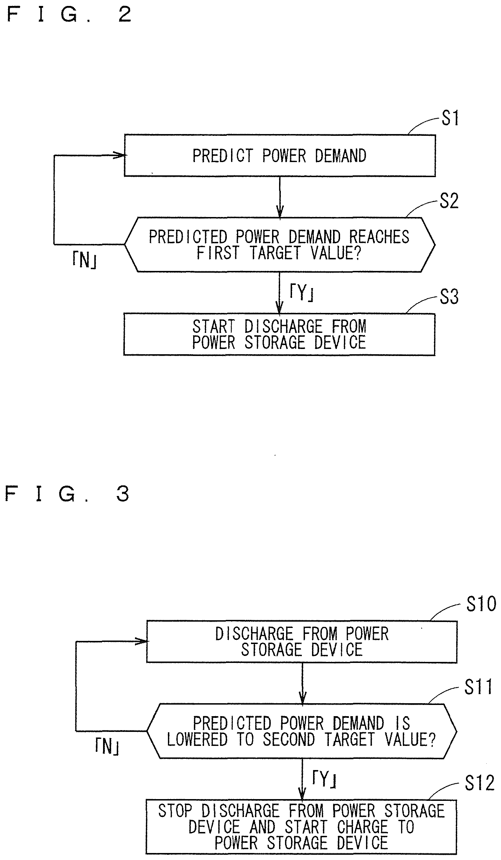

Hereinafter, the operation of the peak cut system 100 according to this embodiment will be specifically described with reference to Figs. 2 to 6.

Here, a first target value and a second target value are previously set to the control unit 3. The first target value or the second target value is selected according to whether or not a predetermined amount of peak cut by the discharge from the power storage device 2 is necessary.

When the prediction value of power demand is the first target value or more, the discharge from the power storage device 2 is started. On the other hand, when the prediction value of the power demand is the second target value or less, the discharge from the power storage device 2 is stopped. Here, in consideration of historical, as the second target value, a value which is slightly smaller than the first target value is adopted.

When the prediction value of the power demand is the second target value or less, the charge to the power storage device 2 may be started with the stop of the discharge from the power storage device 2. In the case, in consideration of excessive power supplied from the power system 7 with respect to the driving of the load 1, the second target value which is smaller than the first target value is selected.

First, it is assumed that the power storage device 2 does not carry out the discharge, the power-generating device 5 does not carry out the power generation, and the load 1 receives only power supply from the power system 7. When the power storage device 2 is not fully charged, the charge is executed by using power received from the power system 7.

As shown in step S1 in Fig. 2, the control unit 3 calculates the prediction value of the power demand at all times (or regularly). Further, the control unit 3 determines whether or not the power demand predicted in step S1 is the first target value or more (step S2).

The used power amount of the load 1 is increased, so that the prediction value of the power demand reaches the first target value (in step S2, "Y"). In the case, there is the necessity for the peak cut process, so that the control of the control unit 3 starts the discharge from the power storage device 2 (step S3). That is, the above-described first peak cut process is started. Here, the power generation by the power-generating device 5 is left stopped.

On the other hand, the prediction value of the power demand is less than the first target value (in step S2, "N"). In the case, the peak cut process is unnecessary, so that the control unit 3 does not execute the discharge from the power storage device 2 and the power generation by the power-generating device 5, and then the process in step S1 is carried out again. That is, the operation after step S1 is repeatedly executed.

Here, the control unit 3 considers the power used state in the load 1 (that is, the prediction value of the power demand), and determines that the power supplied from the power system 7 affords the driving of the load 1. In the case, when the capacity of the power storage device 2 is not fully charged, the control of the control unit 3 carries out the charge to the power storage device 2 during the repeated operation in steps S1 and S2 in Fig. 2.

When the first peak cut process is started in step S3, the control unit 3 executes each operation shown in Figs. 3, 4, and 5.

First, the flow in Fig. 3 will be described.

As described in step S1 in Fig. 2, the control unit 3 continues the calculation of the prediction value of the power demand. In step S3 in Fig. 2, the discharge from the power storage device 2 is started. As shown in step S10 in Fig. 3, the discharge from the power storage device 2 is continued. In the state, the control unit 3 carries out determination in step S11. That is, the control unit 3 determines whether or not the predicted power demand is the second target value or less (step S11).

The used power amount of the load 1 is reduced, so that the prediction value of the power demand is lowered to the second target value (in step S11, "Y"). The case is a case where the necessity for the peak cut process is eliminated, so that the control of the control unit 3 stops the discharge from the power storage device 2 (step S12). That is, the above-described first peak cut process is stopped. Thereafter, the control unit 3 executes the series of operations shown in Fig. 2.

Here, the first peak cut process (that is, the discharge from the power storage device 2) reduces the capacity of the power storage device 2. Accordingly, after step S12, the control unit 3 considers the power used state in the load 1 (that is, the prediction value of the power demand), and determines that the power supplied from the power system 7 affords the driving of the load 1. In the case, the control unit 3 controls the power storage device 2 to start the charge to the power storage device 2.

Alternatively, in step S12, (that is, the prediction value of the power demand is lowered to the second target value), the control of the control unit 3 may start the charge to the power storage device 2 with the stop of the discharge from the power storage device 2.

On the other hand, the prediction value of the power demand is larger than the second target value (in step S11, "N"). The case is a case where the necessity for the peak cut process is continued. The discharge from the power storage device 2 is continued (step S10), and then the operation after step S10 is repeatedly executed.

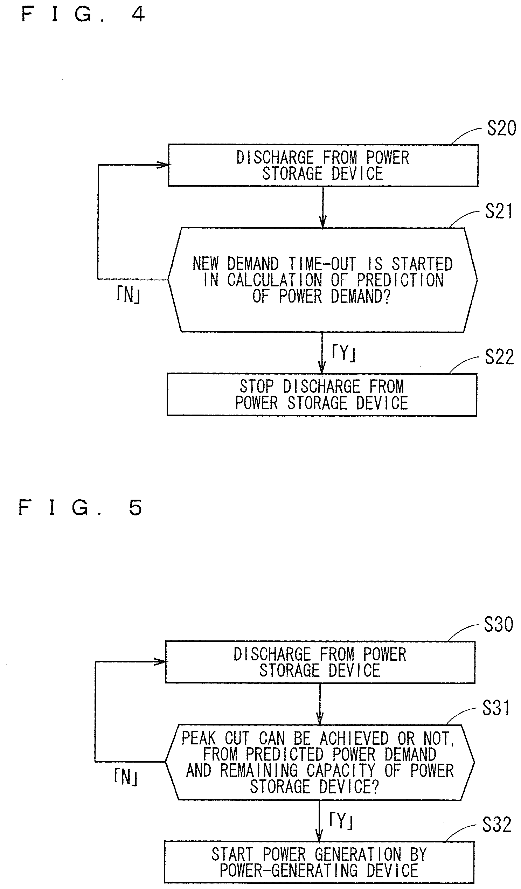

In addition, in the flow in Fig. 4, the discharge from the power storage device 2 is stopped. The flow in Fig. 4 will be described.

As described above, the power demand is continuously calculated for the predetermined demand time-out period. That is, in the case where the predetermined demand time-out is 30 minutes, when the calculation of the power demand for next 30 minutes in the range of 0 to 30 minutes is completed, the calculation of new power demand for 30 minutes in the range of 30 to 60 minutes is started. That is, the value of the power demand is reset to zero at the timing of the start of the next predetermined demand time-out period.

As described in step S1 in Fig. 2, the control unit 3 continues the calculation of the prediction value of the power demand. In step S3 in Fig. 2, the discharge from the power storage device 2 is started. As shown in step S20 in Fig. 4, the discharge from the power storage device 2 is continued. In the state, the control unit 3 carries out determination in step S21. That is, the control unit 3 determines whether or not a new demand time-out period is started for the predetermined demand time-out period (step S21).

It is assumed that the control unit 3 predicts the power demand for the predetermined demand time-out period, a certain predetermined demand time-out period is ended, and then the next demand time-out period is started (in step S21, "Y"). Then, at the timing of the start of the next demand time-out period, the control of the control unit 3 stops the discharge from the power storage device 2 (step S22). That is, the above-described first peak cut process is stopped once. Thereafter, the control unit 3 executes the series of operations shown in Fig. 2.

On the other hand, it is assumed that the control unit 3 predicts the power demand for the predetermined demand time-out period, and a certain predetermined demand time-out period has not been ended yet. For instance, it is assumed that the predetermined demand time-out period is 30 minutes, and then, in the demand time-out period for t to t + 30 minutes, determination time T in step S21 is t < T < t + 30 minutes (in step S21, "N"). In the case, the discharge from the power storage device 2 is continued (step S20), so that the operation after step S20 in Fig. 4 is repeatedly executed.

The flow in Fig. 4 can be considered to be the same as the flow in Fig. 3. That is, as described above, at the timing of the start of the next predetermined demand time-out period, the value of the power demand is reset to zero (for the next predetermined demand time-out period, the prediction value of the power demand is calculated from zero). In the case, the prediction value of the power demand is the second target value or less in step S11 in Fig. 3. Therefore, without additionally providing the flow in Fig. 4, only the flow in Fig. 3 may be provided. However, in this embodiment, for the detailed description of the invention, in addition to the flow in Fig. 3, the flow in Fig. 4 is additionally provided.

In addition, the change in the demand prediction value is large immediately after the start of the demand time-out in Fig. 4. Therefore, any constant period immediately after the start of the demand time-out can also be a charge and discharge inhibition time zone.

As described above, after the start of the discharge from the power storage device 2 in the flow in Fig. 2, the control unit 3 executes the operation of the flow shown in Fig. 5 while executing the flows in Figs. 3 and 4. Next, the flow in Fig. 5 will be described.

As described in step S1 in Fig. 2, the control unit 3 continues the calculation of the prediction value of the power demand. In step S3 in Fig. 2, the discharge from the power storage device 2 is started. As shown in step S30 in Fig. 5, the discharge from the power storage device 2 is continued. In the state, the control unit 3 carries out determination in step S31. That is, from the prediction value of the power demand and the remaining capacity of the power storage device 2 obtained by monitoring the power storage device 2, the control unit 3 determines whether or not a predetermined amount of peak cut cannot be achieved only by the discharge from the power storage device 2 (step S31).

Due to the increasing of the prediction of the power demand and/or the decreasing of the remaining capacity of the power storage device 2, the control unit 3 determines that the predetermined amount of peak cut cannot be achieved only by the discharge from the power storage device 2 (in step S31, "Y"). In the case, the control unit 3 controls the power-generating device 5, so that the power-generating device 5 starts the power generation (step S32). That is, the above-described second peak cut process is executed.

Here, after step S32, from the prediction value of the power demand and the power generation force from the power-generating device 5, the control unit 3 determines that the predetermined amount of peak cut with respect to the power system 7 can be achieved to some extent only by the generated power from the power-generating device 5. In the case, the control of the control unit 3 executes the second peak cut process only by the power-generating device 5. That is, the control unit 3 controls the power storage device 2, stops the discharge from the power storage device 2, and starts the charge to the power storage device 2.

On the contrary, after step S32, from the prediction value of the power demand and the power generation force from the power-generating device 5, the control unit 3 determines that the predetermined amount of peak cut with respect to the power system 7 is difficult only by the generated power from the power-generating device 5. In the case, the control of the control unit 3 executes the second peak cut process in which the discharge from the power storage device 2 and the power generation by the power-generating device 5 are combined.

After step S32, the control unit 3 executes the control in Figs. 2, 3, 4, and 6. Here, in step S22 in Fig. 4, the control unit 3 continues the power generation started in step S32 even when the discharge from the power storage device 2 is stopped.

On the other hand, unlike the determination of "Y" in step S31, the control unit 3 determines that the predetermined amount of peak cut can be achieved only by the discharge from the power storage device 2 (in step S31, "N"). In the case, the control unit 3 does not start the power generation by the power-generating device 5, continues the first peak cut process only by the discharge from the power storage device 2 (step S30), and repeatedly executes the operation after step S30.

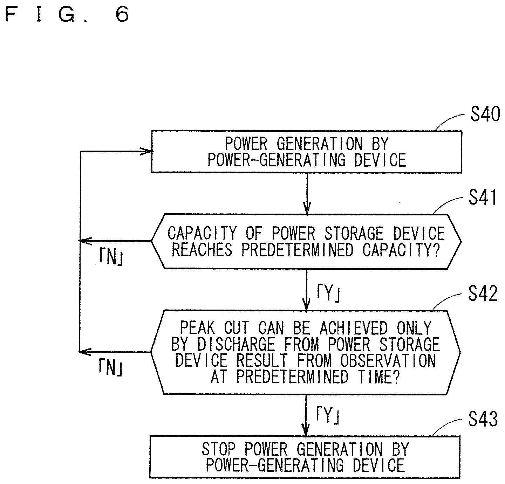

After the operation in step S32 in Fig. 5, the control unit 3 also executes the flow operation in Fig. 6. Next, the flow in Fig. 6 will be described.

In step S32 in Fig. 5, the power generation by the power-generating device 5 is started. As shown in step S40 in Fig. 6, the power generation by the power-generating device 5 is continued. In the state, the control unit 3 monitors the charged state in the power storage device 2. Then, the control unit 3 determines whether or not the capacity of the power storage device 2 reaches a predetermined capacity which is previously set in the control unit 3 (for instance, a fully charged state) (step S41).

When the capacity of the power storage device 2 is less than the predetermined capacity (in step S41, "N"), the second peak cut process with the power generation by the power-generating device 5 is continued to repeatedly execute the operation after step S40.

On the other hand, when the capacity of the power storage device 2 reaches the predetermined capacity (in step S41, "Y"), from the prediction value of the power demand for a predetermined time (e.g., 5 minutes), the control unit 3 determines whether or not the predetermined amount of peak cut can be achieved only by the discharge from the power storage device 2 (step S42). That is, from the prediction value of the power demand for the predetermined time, even if the second peak cut process with the power generation by the power-generating device 5 is stopped, and the first peak cut is processed only by the discharge from the power storage device 2, the control unit 3 determines whether or not the predetermined amount of peak cut can be achieved.

When the control unit 3 determines that the peak cut is difficult only by the discharge from the power storage device 2 (in step S42, "N"), the second peak cut process with the power generation by the power-generating device 5 is continued to repeatedly execute the operation after step S40.

On the contrary, when determining that the peak cut can be achieved only by the discharge from the power storage device 2 (in step S42, "Y"), the control unit 3 controls the power-generating device 5 to stop the power generation by the power-generating device 5 (step S43). The control of the control unit 3 restarts the first peak cut process only by the discharge from the power storage device 2. Thereafter, the control unit 3 carries out the operations shown in Figs. 2 to 5.

Alternatively, even when the power storage device 2 is fully charged and the peak cut can be achieved only by the power storage device 2, the following may be carried out to avoid the repetition of the continuous start and stop of the power-generating device 5. That is, without stopping the power-generating device 5 until the demand time-out in progress is completed, the power-generating device 5 may be stopped when a new demand time-out is started.

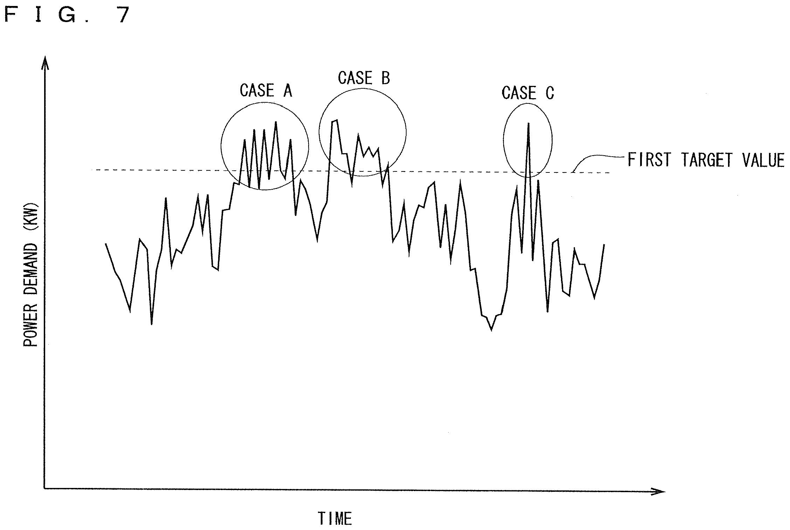

Figs. 7 to 10 are schematic charts which conceptually describe the operation of the peak cut system 100 according to this embodiment.

As shown in Fig. 7, power demand at the predetermined demand time-out is chronologically changed. In cases A, B, and C in Fig. 7, the power demand exceeds the first target value, so that the peak cut is necessary.

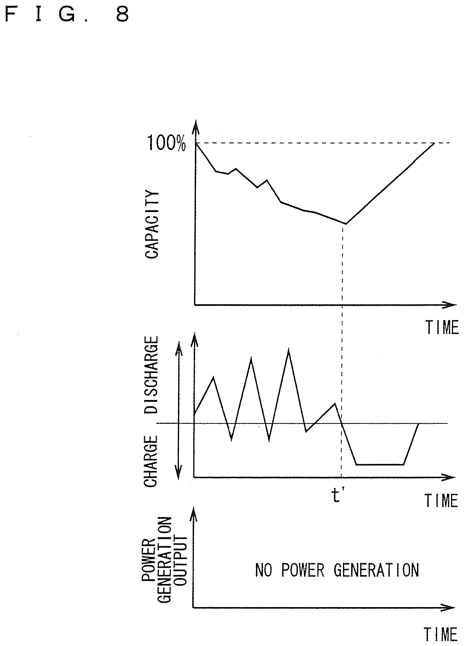

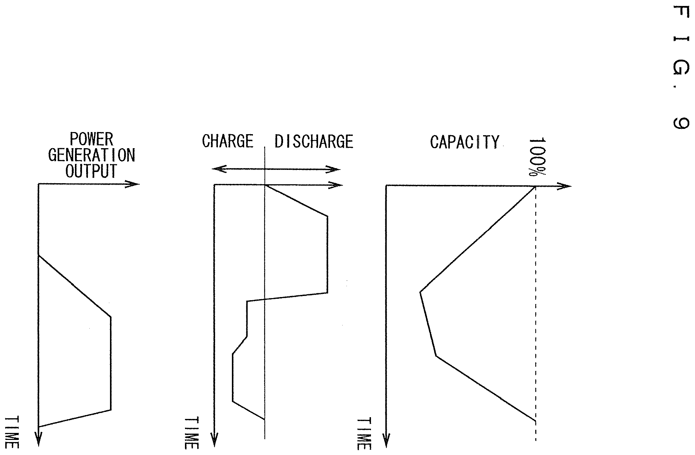

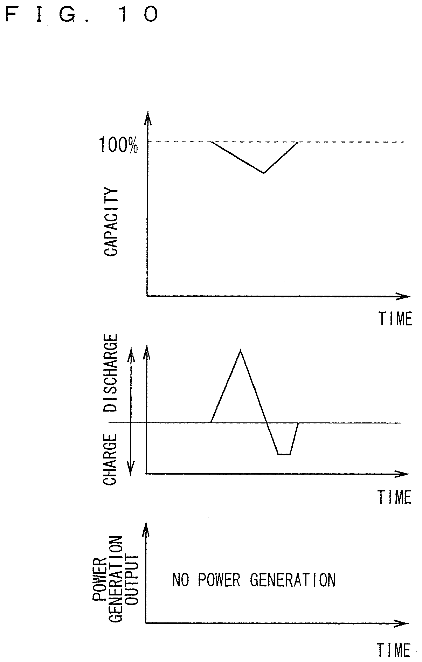

Fig. 8 shows, in case A, the chronological change in the capacity of the power storage device 2, the chronological change in the charge and discharge to and from the power storage device 2, and the chronological change in the power generation by the power-generating device 5. Fig. 9 shows, in case B, the chronological change in the capacity of the power storage device 2, the chronological change in the charge and discharge to and from the power storage device 2, and the chronological change in the power generation by the power-generating device 5. Fig. 10 shows, in case C, the chronological change in the capacity of the power storage device 2, the chronological change in the charge and discharge to and from the power storage device 2, and the chronological change in the power generation by the power-generating device 5.

In case A, the peak cut can be achieved only by the first peak cut process. As shown in Fig. 8, in case A, after the prediction value of the power demand exceeds the first target value for the first time, the power storage device 2 repeats the charge and discharge, but the power generation by the power-generating device 5 is not executed. At time t' in Fig. 8, after the prediction value of the power demand is below the second target value, the peak cut process is stopped, the charge to the power storage device 2 is continuously executed, and the charge to the power storage device 2 is stopped when the power storage device 2 is fully charged.

In case B, the first peak cut process and the second peak cut process are executed. As shown in Fig. 9, in case A, after the prediction value of the power demand exceeds the first target value for the first time, the discharge from the power storage device 2 is continuously executed. However, the predetermined amount of peak cut is difficult only by the discharge from the power storage device 2, so that the second peak cut process with the power-generating device 5 is executed. As shown in Fig. 9, the second peak cut process is executed only by the power generation by the power-generating device 5, and after the start of the second peak cut process, the power storage device 2 continuously executes the charge until it is fully charged by using excessive power from the power-generating device 5.

As in case A, in case C, the peak cut can be achieved only by the first peak cut process. As shown in Fig. 10, in case C, after the prediction value of the power demand exceeds the first target value, the discharge from the power storage device 2 is executed, and the power generation by the power-generating device 5 is not executed. Thereafter, the prediction value of the power demand is below the second target value, the peak cut process is stopped, the charge to the power storage device 2 is continuously executed, and the charge to the power storage device 2 is stopped when the power storage device 2 is fully charged.

As described above, in the peak cut system 100 according to this embodiment, first, the control unit 3 executes the first peak cut process only by the discharge from the power storage device 2. Then, only when the predetermined amount of peak cut cannot be achieved only by the first peak cut process, the second peak cut process with the power generation by the power-generating device 5 is executed.

That is, in the present invention, for the peak cut process, the power generation by the power-generating device 5 can be minimized always without the power generation by the power-generating device 5. Therefore, even when the peak cut process is executed at the increase of the running cost of the power-generating device 5 due to the higher fuel cost, the peak cut system 100 can prevent the power generation by the power-generating device 5. That is, the peak cut system 100 can reduce the running cost of the power-generating device 5.

In the peak cut system 100 according to this embodiment, the control unit 3 predicts the power demand, and executes the first peak cut process when the prediction value of the power demand reaches the previously-set first target value.

In the peak cut system 100 according to this embodiment, the control unit 3 predicts the power demand, and stops the discharge from the power storage device 2 when the prediction value of the power demand is lowered to the previously-set second target value.

In the peak cut system 100 according to this embodiment, the control unit 3 predicts the power demand for the predetermined demand time-out period, and stops the discharge from the power storage device 2 at the timing of the start of the demand time-out period.

In this way, in the peak cut system 100, the prediction value of the power demand is used to control the start and stop of the first peak cut process. Therefore, the peak cut can be executed automatically and at proper timing.

In the peak cut system 100 according to this embodiment, the control unit 3 can also execute control to carry out the charge to the power storage device 2 after the stop of the first peak cut process.

Therefore, the peak cut system 100 can recover the capacity of the power storage device 2 reduced by the first peak cut process to the fully electrically charged state by using excessive power, such as power supplied from the power system 7.

In the peak cut system 100 according to this embodiment, the control unit 3 can execute the second peak cut process by combining the power generation by the power-generating device 5 and the discharge from the power storage device 2.

Therefore, even when the predetermined amount of peak cut is difficult only by the power generation by the power-generating device 5, the peak cut system 100 can realize the predetermined amount of peak cut by using the discharge from the power storage device 2.

In the peak cut system 100 according to this embodiment, the control unit 3 can execute the second peak cut process only by the power generation by the power-generating device 5. The control unit 3 can execute the charge to the power storage device 2.

Therefore, for the second peak cut process period, the peak cut system 100 can recover the capacity of the power storage device 2 reduced by the peak cut process to the fully charged state by using excessive power, such as power outputted from the power-generating device 5.

In the peak cut system 100 according to this embodiment, the control unit 3 stops the power generation by the power-generating device 5 and restarts the first peak cut process when the charge to the power storage device 2 reaches the predetermined capacity and the control unit 3 determines that the peak cut can be achieved only by the discharge from the power storage device 2.

For instance, after the start of the second peak cut process, the prediction value of the power demand value is reduced. In the case, when the peak cut is necessary, the second peak cut process can be transferred to the first peak cut process. Accordingly, after the start of the second peak cut process, the power generation by the power-generating device 5 can be minimized. Therefore, in the peak cut system 100, after the start of the second peak cut process, the power generation by the power-generating device 5 can be prevented. That is, in the peak cut system 100, after the start of the second peak cut process, the running cost of the power-generating device 5 can be reduced.

In the peak cut system 100 according to this embodiment, the power storage device 2 may function as a backup power source in the event that an abnormal condition of the power system 7, such as a power failure, is caused.

### Reference Signs List

- 1: Load
- 2: Power storage device
- 3: Control unit
- 4: PCS
- 5: Power-generating device
- 6: Power receiving unit
- 7: Power system
- 100: Peak cut system

## Claims

1. A peak cut system comprising:
a load (1);
a power system (7) which is adapted to carry out power supply to said load;
a power-generating device (5) which is adapted to generate power and to supply the generated power to said load;
a power storage device (2) which is adapted to carry out charge and discharge with respect to said load; and
a control unit (3) which is adapted to control the power supply to said load,
wherein said control unit is adapted to execute a first peak cut process which carries out peak cut with respect to power received from said power system by executing said discharge from said power storage device, and is adapted to execute a second peak cut process which carries out said peak cut by carrying out said power generation by said power-generating device only when a predetermined amount of peak cut power cannot be achieved only by said discharge from said power storage device
**characterized in that** said control unit is adapted to predict power demand, when the prediction value of the power demand reaches a previously-set first target value at a first timing, said control unit is adapted to start to execute said first peak cut process at the first timing;
wherein
when the prediction value of the power demand is lowered to a previously-set second target value at a second timing, said control unit is adapted to stop said discharge from said power storage device at the second timing, and
the second target value is smaller than the first target value.

2. The peak cut system according to claim 1, wherein said control unit is adapted to predict said power demand for a predetermined demand time-out period and is adapted to stop said discharge from said power storage device at the timing of the start of said demand time-out period.

3. The peak cut system according to claim 1, wherein said control unit is adapted to carry out said charge to said power storage device after the stop of said discharge from said power storage device.

4. The peak cut system according to claim 1, wherein said control unit is adapted to combine said power generation by said power-generating device and said discharge from said power storage device to execute said second peak cut process.

5. The peak cut system according to claim 1, wherein said control unit is adapted to execute said second peak cut process only by said power generation by said power-generating device and is adapted to execute said charge to said power storage device.

6. The peak cut system according to claim 5, wherein when said charge to said power storage device reaches a predetermined capacity and said control unit determines that said peak cut can be achieved only by said discharge from said power storage device, said control unit is adapted to stop said power generation by said power-generating device to restart said first peak cut process.

## Patentansprüche

1. Spitzenkappsystem, umfassend:
eine Last (1);
ein Leistungssystem (7), das angepasst ist, Leistungszuführung zur Last durchzuführen;
eine Leistungserzeugungsvorrichtung (5), die angepasst ist, Leistung zu erzeugen und der Last die erzeugte Leistung zuzuführen;
eine Leistungsspeichervorrichtung (2), die angepasst ist, Ladung und Entladung in Bezug auf die Last durchzuführen; und
eine Steuereinheit (3), die angepasst ist, die Leistungszuführung zur Last zu steuern,
wobei die Steuereinheit angepasst ist, einen ersten Spitzenkappvorgang auszuführen, der Spitzenkappen in Bezug auf vom Leistungssystem empfangene Leistung durchführt, indem die Entladung aus der Leistungsspeichervorrichtung ausgeführt wird, und angepasst ist, einen zweiten Spitzenkappvorgang auszuführen, der das Spitzenkappen durchführt, indem die Leistungserzeugung durch die Leistungserzeugungsvorrichtung nur dann durchführt wird, wenn eine vorbestimmte Menge an Spitzenkappleistung nicht einzig durch die Entladung aus der Leistungsspeichervorrichtung erreicht werden kann,
**dadurch gekennzeichnet, dass** die Steuereinheit angepasst ist, Leistungsnachfrage vorherzusagen, wenn der Vorhersagewert der Leistungsnachfrage zu einem ersten Zeitpunkt einen vorab eingestellten ersten Zielwert erreicht, wobei die Steuereinheit angepasst ist, ein Ausführen des ersten Spitzenkappvorgangs zum ersten Zeitpunkt zu starten;
wobei
wenn der Vorhersagewert der Leistungsnachfrage zu einem zweiten Zeitpunkt auf einen vorab eingestellten zweiten Zielwert gesenkt wird, die Steuereinheit angepasst ist, die Entladung aus der Leistungsspeichervorrichtung zum zweiten Zeitpunkt zu stoppen, und
der zweite Zielwert kleiner ist als der erste Zielwert.

2. Spitzenkappsystem nach Anspruch 1, wobei
die Steuereinheit angepasst ist, die Leistungsnachfrage für einen vorbestimmten Nachfrageausfallzeitraum vorherzusagen und angepasst ist, die Entladung aus der Leistungsspeichervorrichtung zum Zeitpunkt des Starts des Nachfrageausfallzeitraums zu stoppen.

3. Spitzenkappsystem nach Anspruch 1, wobei
die Steuereinheit angepasst ist, die Ladung der Leistungsspeichervorrichtung nach dem Stopp der Entladung aus der Leistungsspeichervorrichtung durchzuführen.

4. Spitzenkappsystem nach Anspruch 1, wobei
die Steuereinheit angepasst ist, die Leistungserzeugung durch die Leistungserzeugungsvorrichtung und die Entladung aus der Leistungsspeichervorrichtung zu kombinieren, um den zweiten Spitzenkappvorgang auszuführen.

5. Spitzenkappsystem nach Anspruch 1, wobei
die Steuereinheit angepasst ist, den zweiten Spitzenkappvorgang einzig durch die Leistungserzeugung durch die Leistungserzeugungsvorrichtung auszuführen und angepasst ist, die Ladung der Leistungsspeichervorrichtung auszuführen.

6. Spitzenkappsystem nach Anspruch 5, wobei,
wenn die Ladung der Leistungsspeichervorrichtung eine vorbestimmte Kapazität erreicht und die Steuereinheit bestimmt, dass ein Spitzenkappen einzig durch die Entladung aus der Leistungsspeichervorrichtung erreicht werden kann, die Steuereinheit angepasst ist, die Leistungserzeugung durch die Leistungserzeugungsvorrichtung zu stoppen, um den ersten Spitzenkappvorgang erneut zu starten.

## Revendications

1. Système d'écrêtage comprenant :
une charge (1) ;
un système d'alimentation électrique (7) qui est adapté pour réaliser une alimentation électrique à ladite charge ;
un dispositif de production électrique (5) qui est adapté pour produire de l'énergie électrique et pour fournir l'énergie électrique produite à ladite charge ;
un dispositif de stockage électrique (2) qui est adapté pour réaliser la charge et la décharge par rapport à ladite charge ; et
une unité de commande (3) qui est adaptée pour commander l'alimentation électrique à ladite charge,
dans lequel ladite unité de commande est adaptée pour exécuter un premier processus d'écrêtage qui réalise l'écrêtage par rapport à l'énergie électrique reçue par ledit système d'alimentation électrique par exécution de ladite décharge dudit dispositif de stockage électrique, et est adaptée pour exécuter un second processus d'écrêtage qui réalise ledit écrêtage par réalisation de ladite production d'énergie électrique par ledit dispositif de production électrique seulement lorsqu'une quantité prédéterminée d'énergie électrique écrêtée ne peut pas être atteinte seulement par ladite décharge dudit dispositif de stockage électrique,
**caractérisé en ce que** ladite unité de commande est adaptée pour prévoir une demande d'énergie électrique, lorsque la valeur de prédiction de la demande d'énergie électrique atteint une première valeur cible précédemment établie à un premier cadencement, ladite unité de commande est adaptée pour commencer à exécuter ledit premier processus d'écrêtage au premier cadencement ;
dans lequel
lorsque la valeur de prédiction de la demande d'énergie électrique est abaissée à une seconde valeur cible précédemment établie à un second cadencement, ladite unité de commande est adaptée pour arrêter ladite décharge dudit dispositif de stockage électrique au second cadencement, et
la seconde valeur cible est inférieure à la première valeur cible.

2. Système d'écrêtage selon la revendication 1, dans lequel ladite unité de commande est adaptée pour prévoir ladite demande d'énergie électrique pour une période de temporisation de demande prédéterminée et est adaptée pour arrêter ladite décharge dudit dispositif de stockage électrique au cadencement du démarrage de ladite période de temporisation de demande.

3. Système d'écrêtage selon la revendication 1, dans lequel
ladite unité de commande est adaptée pour réaliser ladite charge audit dispositif de stockage électrique après l'arrêt de ladite décharge dudit dispositif de stockage électrique.

4. Système d'écrêtage selon la revendication 1, dans lequel
ladite unité de commande est adaptée pour combiner ladite production d'énergie électrique par ledit dispositif de production électrique et ladite décharge dudit dispositif de stockage électrique pour exécuter ledit second processus d'écrêtage.

5. Système d'écrêtage selon la revendication 1, dans lequel
ladite unité de commande est adaptée pour exécuter ledit second processus d'écrêtage seulement par ladite production d'énergie électrique par ledit dispositif de production électrique et est adaptée pour exécuter ladite charge audit dispositif de stockage électrique.

6. Système d'écrêtage selon la revendication 5, dans lequel
lorsque ladite charge audit dispositif de stockage électrique atteint une capacité prédéterminée et ladite unité de commande détermine que ledit écrêtage peut être atteint seulement par ladite décharge dudit dispositif de stockage électrique, ladite unité de commande est adaptée pour arrêter ladite production d'énergie électrique par ledit dispositif de production électrique pour redémarrer ledit premier processus d'écrêtage.
